# EUROPÄISCHE PATENTSCHRIFT

(11) **EP 0 534 894 B1**
(45) Veröffentlichungstag und Bekanntmachung des Hinweises auf die Patenterteilung: **20.12.1995**
(21) Anmeldenummer: 92710029.7
(22) Anmeldetag: 14.09.1992
(51) Int. Cl.: E06B 9/80, H01H 19/18

(54) **Vorrichtung zur Antriebsabschaltung des Motors elektrisch betriebener Rolläden, Rolltore, Markisen u.dgl.**
Device for a drive-cut off of a motor of electric operated revolving shutters, roll-up doors, canvas blinds and the like
Dispositif pour une déconnexion d'entraînement d'un moteur de volets roulants, de portes à rideaux, de stores et de choses similaires

(30) Priorität: 24.09.1991 DE 9111905 U; 30.11.1991 DE 9114916 U
(43) Veröffentlichungstag der Anmeldung: 31.03.1993
(73) Patentinhaber: Ernst Selve GmbH & Co. KG, D-58513 Lüdenscheid (DE)
(72) Erfinder: Haag, Richard, W-7181 Satteldorf-Gröningen (DE); Klostermann, Harald, W-5880 Lüdenscheid (DE); Achenbach, Jens, W-5880 Lüdenscheid (DE); Müther, Reinhard, W-5880 Lüdenscheid (DE)
(74) Vertreter: Patentanwälte Ostriga & Sonnet

(56) Entgegenhaltungen:
- EP-A- 0 021 195
- CH-A- 674 877
- DE-A- 2 613 764
- DE-A- 3 011 706
- DE-A- 3 240 495
- DE-A- 3 405 881
- DE-A- 3 503 816

## Beschreibung

Elektrisch betriebene Rolläden, Rolltore, Sektionaltore, Rollgitter und andere Öffnungsverschlüsse sowie Markisen, Sonnendächer u.dgl. erfordern, insbesondere bei automatisiertem Betrieb, daß der Antriebsmotor in den Endlagen des jeweiligen Öffnungsverschlusses bzw. Überdachung zuverlässig abgeschaltet wird, um eine Überlastung des Panzers, Markisentuchs, Gestänges u.dgl. und einen allzeit sicheren Betrieb zu gewährleisten. Zugleich ist es erforderlich, durch bauliche Konditionen vorgegebene oder gewünschte Endlagen des Panzers bzw. der Markise exakt reproduzierbar einstellen zu können.

Im Stand der Technik ist dies in zahlreichen Ausführungen bereits in Angriff genommen worden. Die Anmelderin selbst schlägt z.B. in ihrer DE 34 05 881 A1 eine sehr elegante, aber auch aufwendige Antriebsabschaltung an einem Rohrmotor zum Auf- und Abwickeln von Rolläden, Rolltoren, Markisen u.dgl. vor, bei der die beiden Endschalter, die für die Motorstromabschaltung in den jeweiligen Endlagen des Panzers oder Markisentuches verantwortlich sind, selbst mit mindestens einem elektromotorischen Antrieb verstellbar sind und wobei die diesen Antrieb betätigenden Schalter und ggf. die Spannungsquelle für diesen Antrieb lösbar an einem mit dem Antrieb über ein Steuerkabel verbundene Steckkupplung anschließbar sind. Damit wird ein erheblicher Bedienungsvorteil einerseits durch die elektromotorisch einstellbaren Endschalter und andererseits durch die Möglichkeit der Ferneinstellung der Endschalter erreicht. Dieser Vorschlag ist fast luxuriös, aber - wie gesagt - sehr aufwendig und kann einen weiteren Aspekt nicht berücksichtigen, der sich insbesondere bei Rolläden, namentlich solchen aus Kunststoff, in der Praxis häufig stellt.

Wenn im Winter durch Frost, Schnee und Eis die Abschlußlamelle eines Rolladenpanzers am Fensterbrett bzw. Fenstersims festgefriert, ist es ratsam, in dieser Zeit die elektrisch betriebenen Rolläden gar nicht oder nur teilweise herunterzulassen, damit die unterste Lamelle nicht auf dem Fensterbrett aufliegt. So kann man der Gefahr am besten begegnen, daß durch das Einschalten des Motors am Morgen bei festgefrorenem Rolladen die einzelnen Lamellen des Panzers regelrecht auseinandergerissen werden. Dies wirkt sich vor allem bei vollautomatisch betätigten Rolläden durch entsprechende Programmausführung zwangsläufig selbstzerstörend aus.

Ausgehend von Vorstehendem ist es ein Aspekt der von der DE 34 05 881 A1 ausgehenden Erfindung, eine Vorrichtung zur Antriebsabschaltung des Motors elektrisch betriebener Rolläden, Rolltore, Markisen u.dgl. in möglichst einfacher Art und Weise so zu konzipieren, daß deren Soll-Endlagen bei nur geringen Anforderungen an den Einstell- bzw. Justageaufwand zuverlässig abgeschaltet werden können.

Ein weiterer Aspekt ist es, von der Endlagenabschaltung unabhängig auftretende Betriebsstörungen, wie etwa das eingangs erwähnte Festfrieren der untersten Lamelle eines Rolladens, Panzerverklemmungen u.dgl. im Sinne einer sofortigen Motorabschaltung ohne Beschädigung oder Beeinträchtigung der Gerätefunktion sicher zu beherrschen.

Aufgabe der Erfindung ist es, eine Vorrichtung anzugeben, die diese Aspekte auf einfache Weise gemeinsam zu berücksichtigen in der Lage ist.

Die Erfindung löst diese Aufgabe im Zusammenhang mit Rolläden, Rolltoren u. dgl. durch die im unabhängigen Anspruch 1 und bei Markisen u. dgl. durch die im nebengeordneten Anspruch 2 angegebenen Merkmale.

Danach bildet jedes Schaltglied als Bestandteil des Motorlagers eine Drehmomentstütze aus, die gegen Wirkung einer in ihrer Rückstellkraft einstellbaren Feder, vom Kupplungsglied des Motors angetrieben, den Schalter zum Schließen des Motorstromkreises betätigt. Das bei - z. B. infolge Erreichens einer Endlage, einer anderweitigen Hemmung od. dgl. - blockiertem Motor oder bei Erreichen einer einstellbaren Zugkraft des Panzers, u.dgl. auf das Schaltglied einwirkende Drehmoment schaltet somit unabhängig von der Bewegungsrichtung den Motorantrieb ab. Daß die Stellschraube als Einstellorgan für die Rückstellkraft der Feder mit ihrem Schaft die Feder durchdringt, führt ebenso zu einer kompakten und daher platzsparenden Bauweise wie die zudem sehr einfache Möglichkeit, die Vorrichtung an den Mehrkant der Motorwelle anstecken zu können, ohne daß besondere Anflanschungen vorgesehen sein müssen.

Die Erfindung bildet im Prinzip die bisher starre Drehmomentabstützung bekannter Motorlagerungen als abgefederte Drehmomentabstützung mit einstellbar federkraftabhängiger Schaltfunktion aus und erreicht damit eine sowohl in beiden Endlagen des Panzers u.dgl. als auch bei zur Blockierung der Welle führenden Betriebsstörungen sofort und stets absolut zuverlässig tätig werdende Motorabschaltung durch Drehmomentsteuerung, die aufgrund ihrer kompakten Bauweise einen einfachen Einbau z.B. in vorgegebene Rolladenkästen erlaubt.

Zum einen müssen keine Endschalter oder Anschläge in aufwendiger Weise justiert werden, da für die notwendige Netzabschaltung bzw. Spannungsunterbrechung nur das einstellbar erkannte Drehmoment herangezogen wird. Außerdem wirkt diese Art der Antriebsabschaltung nicht - wie die bekannten Endschalter - nur in den Endlagen, sondern immer dann, wenn das auf die Motorwelle einwirkende Drehmoment den eingestellten Schwellwert überschreitet. Statt wie bisher einzelne Endanschläge oder Endschalter mechanisch genau einstellen zu müssen, ist es nunmehr nur noch erforderlich, das zulässige Drehmoment einzustellen, wozu auf einfache Weise die betreffende Feder in ihrer Rückstellkraft eingestellt werden muß. Bei entsprechend ausgelegter Konstruktion ist dies mit einem einfachen Schraubendreher auf leichteste Art und Weise zu bewerkstelligen. Zudem muß die Einstellung in der Regel nur einmal vorgenommen werden, weil die Drehmoment-Abschaltung entsprechend der Erfindung praktisch unabhängig ist von Toleranzen, die sich während des Betriebs von Rolläden, Rolltoren, Markisen u.dgl. üblicherweise einstellen. Auch diesbezüglich ist die neue Vorrichtung bereits unter dem Aspekt der Endlagenabschaltung überlegen, denn linear oder drehverschiebbar einzustellende Schalter müssen bislang nach einer gewissen Betriebsdauer meist nachjustiert werden.

Bei einem Rolladen, Rolltor, Scherengitter u.dgl. erzielt die erfindungsgemäße Vorrichtung sowohl bei Erreichen der oberen als auch bei Erreichen der unteren Endlage die Wirkung, daß der in der jeweiligen Endlage blockierte Panzer die Motorwelle - in der Regel das Rohr eines Rohrmotors (vgl. DE 34 05 881 A1), auf das der Panzer oder das Markisentuch aufgewickelt wird - festhält, so daß der Motor nun ein Gegendrehmoment auf das Motorlager ausübt und dieses in Drehbewegung versetzt. Da das betreffende Schaltglied als Teil des Motorlagers vom Kupplungsglied angetrieben ist, dreht bzw. schwenkt es mit, betätigt den Schalter und öffnet den Antriebsstromkreis für den Motor, so daß dieser raschestmöglich stoppt.

Bei einem Rolladen, Rolltor, Sektionaltor, Roll- oder Scherengitter od.dgl. sind die Verhältnisse bei Erreichen der oberen oder unteren Endlage - jeweils nur mit entgegengesetzten Kraftwirkungs- und Momentenrichtungen - gleich, denn das Erreichen der Endlagen blockiert in jedem Falle den Motor. Bei Markisen liegen die Verhältnisse bei Erreichen der Einfahr-Endstellung gleichermaßen, sie unterscheiden sich jedoch bei ausgefahrenem Markisentuch, weil das nicht drucksteife Markisentuch keine rückwirkenden Kräfte und Gegendrehmomente übertragen kann.

Eine über die ausgefahrene Endlage des Markisentuches erfolgende Fortdrehung der Wickelwelle würde bewirken, daß das Markisentuch in Gegenrichtung wieder auf die Wickelwelle aufgewickelt wird. Wie herausgefunden wurde, ist die ausgefahrene End-Stellung einer Markise in der Regel dadurch gekennzeichnet, daß hier besonders hohe Zugkräfte am Markisentuch und also auch an der Wickelwelle angreifen. Dies gilt insbesondere für Gelenkarm-Markisen bei nicht völlig gestreckten Gelenkarmen, in deren Gelenken Streckfedern angebracht sind.

Zur automatischen Antriebsabschaltung des Motors bei einer Markise in deren so gekennzeichneter Endlage wird nach der Erfindung die Zugkraft herangezogen, mit der das Markisentuch, die Markisen-Ausfallstange und die Federn der Gelenkarme auf das Motorlager einwirken, bzw. das entsprechende Drehmoment zur Endabschaltung herangezogen. Auch hier ist zur Abschaltung in Ausfahrstellung lediglich die zur Abschaltvorrichtung gehörige Feder in ihrer Federkraft einzustellen. Mechanisch längs- oder drehverstellbare Schalter bzw. damit in Verbindung tretende Anschläge brauchen ebenfalls nicht justiert zu werden.

Die Erfindung schafft somit insgesamt eine universell einsetzbare Vorrichtung für Rolläden, Rolltore und andere Öffnungsverschlüsse sowie für Markisen und andere aus- und einfahrbare Überdachungen, die einfach aufgebaut und leicht einstellbar ist sowie in allen betriebsmäßigen Endlagen und auch in Störfällen absolut sicher den Motor abschaltet.

Die erfindungsgemäße Vorrichtung ist wesentlich einfacher in der Herstellung und in der Bedienung als eine übliche Einrichtung mit einzustellenden Endschaltern und/oder Endanschlägen. Ein ganz besonderer Vorteil der Erfindung besteht also auch darin, daß trotz dieser Vereinfachung die Vorrichtung zusätzlich noch die Abschaltung des Antriebsmotors in Fällen von Betriebsstörungen ermöglicht, was mit bisherigen Endschaltern selbstverständlich unmöglich ist.

Weitere vorteilhafte Merkmale und wichtige Ausgestaltungen der Erfindung sind in den unabhängigen Ansprüchen angegeben und werden besonders deutlich anhand der nachfolgenden Beschreibung einiger in den Zeichnungen dargestellter Ausführungsbeispiele. In den Zeichnungen zeigen:
- Fig. 1 und 2: Frontansicht und Seitenansicht einer einfachen in beiden richtungen wirkenden Vorrichtung,
- Fig. 3 bis 6: eine in der Wirkung mit der Ausführungsform nach den Fig. 1 und 2 vergleichbaren Variante in kompakterer Form,
- Fig. 7 bis 10: eine Weiterentwicklung der Ausführung nach den Fig. 3 bis 6 und
- Fig. 11 bis 14: eine aus der Version der Fig. 7 bis 10 abgeleitete Abschaltvorrichtung für Markisen u.dgl.

Für gleiche oder im wesentlichen gleichwirkende Bauteile werden bei allen Ausführungsformen nachfolgend dieselben Bezugsziffern verwendet.

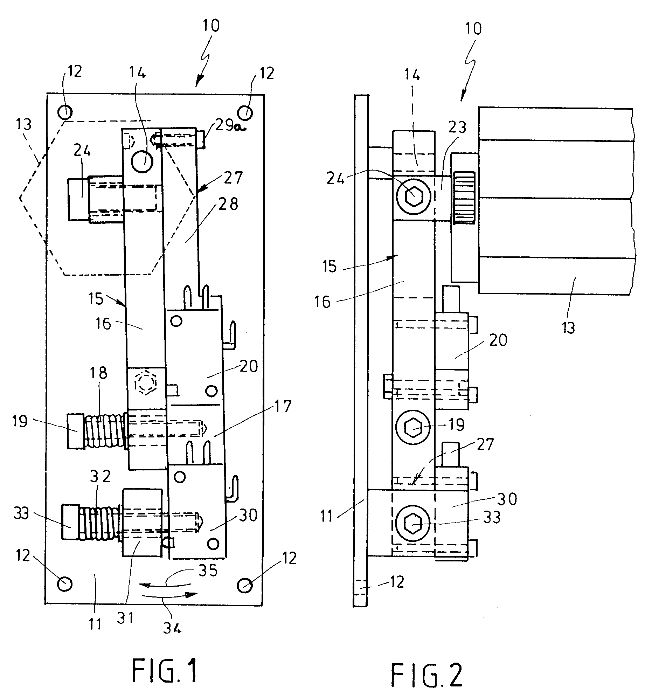

Die insgesamt mit 10 bezeichnete Vorrichtung nach den Fig. 1 und 2 baut auf einer Montageplatte 11 auf, die mit Durchbrüchen 12 zur seitlichen Befestigung neben der Wickelwelle 13 für einen Panzer eines Rolladen, Rolltors od.dgl. oder das Tuch einer Markise innerhalb eines Rolladenkastens oder einer Markisenhalterung raumfest angebracht wird.

An einer lotrecht auf der Montageplatte 11 befestigten Achse 14 lagert schwenkbar ein Schaltglied 15 in Gestalt eines einarmigen Hebels 16, also derart, daß das Schaltglied 15 Schwenkbewegungen um die Achse 14 ausführen kann.

Mit 17 ist ein Anschlag bezeichnet, an dem das Schaltglied 15 in seiner in Fig. 1 gezeigten Lage anliegt. Dabei ist das Schaltglied 15 mittels einer Feder 18 gegen den Anschlag 17 vorgespannt. Die als Schraubendruckfeder ausgebildete Feder 18 lagert auf dem Schaft einer Stellschraube 19 zwischen deren Kopf und der diesem zugewandten Außenseite des Schaltgliedes 15. Der Gewindeschaft der Stellschraube 19 ist in den Anschlag 17 eingeschraubt. Durch Betätigung der Stellschraube 19 läßt sich folglich die Kraft der Feder 18 einstellen, und zwar sehr feinfühlig.

Der Anschlag 17 ist integraler Bestandteil eines zweiten Schaltgliedes 27, welches ebenfalls als einarmiger Hebel 28 ausgebildet und mit einer Schraube 29a an den ersten Hebel 16 angeschlossen ist. Der zu dem ersten Schaltglied 15 gehörende erste Schalter 20 ist fest auf dem zweiten Schaltglied 27 angebracht. Deshalb und wie aus nachstehendem erkennbar, hält die Schraube 29 das zweite Schaltglied 27 nicht starr am ersten Schaltglied 25, sondern in einer solchen Weise, daß sich die beiden Schaltglieder 15 und 27 voneinander abspreizen können.

Das Schaltglied 27 trägt einen zweiten, einen Schließerkontakt aufweisenden Schalter 30, der mit einem fest auf der Montageplatte 11 angebrachten Anschlag 31 zusammenwirken kann, wo bei diesem Anschlag 31 eine zweite Feder 32 mit Einstellschraube 33 zugeordnet ist.

Beide Schaltglieder 15 und 27 lassen sich in der dargestellten, aneinander anliegenden Position durch Krafteinleitung am ersten Schaltglied 15, also als Koppel- oder Schlepphebel, gemeinsam in die mit 34 bezeichnete Richtung schwenken, gemeinsam zurück jedoch nur bis in diejenige Stellung, in der das Schaltglied 27 am Anschlag 31 anliegt und der Schalter 30 betätigt (geschlossen) ist. Von dieser nicht dargestellten Stellung ausgehend, läßt sich in Gegenrichtung 35 das Schaltglied 15 allein verschwenken, wobei es sich gegen Wirkung der Feder 18 vom zweiten, wie erwähnt am Anschlag 31 festgehaltenen, Schaltglied 27 abspreizt, bis der betreffende Schalter 20 (ebenfalls einen Schließerkontakt beinhaltend) öffnet und nun seinerseits den Stromkreis unterbricht. Schalter 20 befindet sich dabei im Stromkreis für die Aufwärtsbewegung und Schalter 30 im Stromkreis für die Abwärtsbewegung, so der Motor immer dann abgeschaltet wird, wenn der Schalter 20 oder der Schalter 30 öffnet, was jeweils abhängig von der Drehrichtung des Motors möglich ist.

Die Schwelle für das schaltende Drehmoment kann, auf die jeweilige Drehrichtung bezogen, einerseits mit der Einstellschraube 19 für die Feder 18 und andererseits mit der Einstellschraube 33 für die Feder 32 justiert werden. Es ist klar, daß sich diese Vorrichtung sowohl dazu eignet, den Motor bei Erreichen der oberen Endstellung des Panzers als auch alternativ bei Erreichen seiner unteren Endstellung abzuschalten, wie es ebenso möglich ist, jeweils dann eine Abschaltung vorzunehmen, wenn durch Blockierung des Panzers eines Rolladens, Rolltors u.dgl. das eingestellte Drehmoment überschritten wird.

Zum Antrieb von Rolläden, auch Rolltoren und insbesondere Markisen werden in der Regel Rohrmotoren verwendet, die in der rohrförmig hohlen Wickelwelle 13 angeordnet sind. Mit 23 ist ein Kupplungsglied in Form eines Vierkants bezeichnet, das - beim Ausführungsbeispiel über eine Befestigungsschraube 24 - mit dem Schaltglied 15 auf Dreh- bzw. Schwenkmitnahme verbunden ist. Das Schaltglied 15 wirkt in Verbindung mit der Feder 18 als Drehmomentstütze. Das bedeutet, daß das Kupplungsglied 23 drehfest gehalten werden muß, wenn der Motor die Wickelwelle 13 in dem einen oder anderen Drehsinn antreibt.

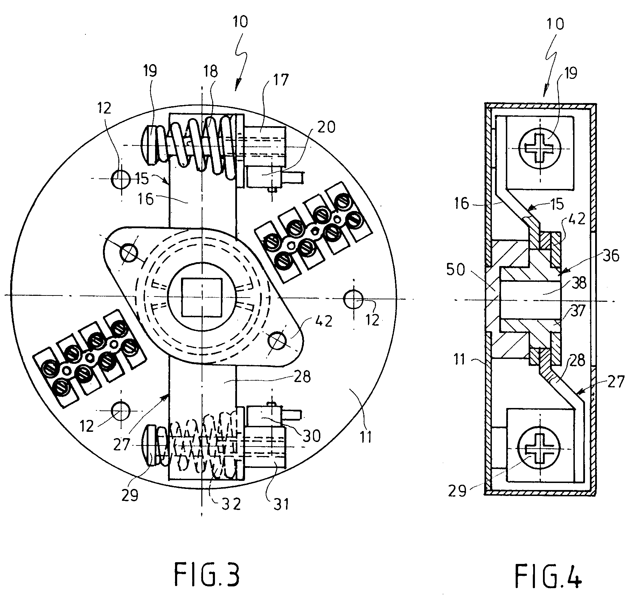

Eine zweite, in den Fig. 3 bis 6 dargestellte Abschaltvorrichtung leistet dasselbe wie die gleichfalls doppelt wirkende Abschaltvorrichtung nach den Fig. 1 und 2. Sie ist jedoch insgesamt kompakter ausgebildet und verfügt nicht über Koppel- oder Schlepphebel als Schaltglieder, sondern über unabhängig voneinander in die unterschiedlichen Richtungen betätigbare Schaltglieder, die von einem gemeinsamen Antriebselement alternativ beaufschlagt werden.

Im einzelnen baut diese Vorrichtung auf einer runden und somit besonders platzsparend einbaubaren Montageplatte 11 auf, an der Anschläge 17 und 31 sowie Mikroschalter 20 und 30 fest angebracht sind. In entsprechender Anzahl sind mittels Einstellschrauben 19 und 29 justierbare Federn 18 und 32 wie zuvor angeordnet und zwei jeweils als einarmige Hebel 16 und 28 gestaltete Schaltglieder 15 und 27 vorhanden.

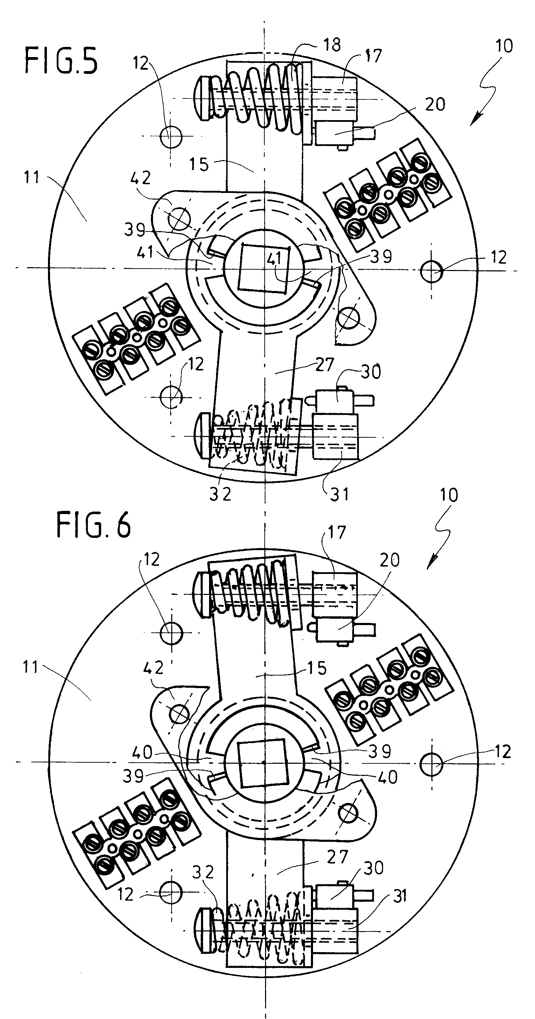

Diese Schaltglieder 15 und 27 erstrecken sich nun vom Zentrum der Vorrichtung aus in entgegengesetzte Richtungen und sind nicht zwangsweise miteinander gekoppelt, sondern vielmehr alternativ von einem am nicht dargestellten Kupplungsglied angreifenden Mitnehmer 36 in die eine oder die andere Drehrichtung schwenkbar. Der Mitnehmer 36 besteht aus einer an der Montageplatte 11 (dort in einem Lager 50) drehbar gelagerten Nabe 37 mit einem Innenmehrkant 38 zur steckbaren Kupplung auf Drehmitnahme mit dem motorseitigen Vierkant (nicht dargestellt). Beide Schaltglieder 15 und 27 sind im wesentlichen formschlüssig mit dem Mitnehmer 36 gekuppelt, jedoch mit umfänglichem Bewegungsspiel 39, so daß der Mitnehmer 36 bei Drehung in der einen Richtung nur das eine Schaltglied 15 bzw. 27 und bei Schwenken in Gegenrichtung nur das andere Schaltglied 27 bzw. 15 mitnehmen kann. Das geschieht wiederum entgegen der Kraft der betreffenden zugehörigen Feder 18 bzw. 32, so daß die Abschaltschwellen in jeder der beiden möglichen Richtungen unabhängig voneinander justiert werden können. Die beiden richtungsabhängigen Auslösestellungen zeigen die Fig. 5 und 6 in Gegenüberstellung. Lediglich zur Verbesserung des Verständnisses sei erwähnt, daß die Nabe 37 an einander diametral gegenüberliegenden Stellen sich keilförmig nach außen öffnende Ausklinkungen besitzt, in die entsprechende, jedoch in Umfangsrichtung kürzere Nasen 40 bzw. 41 der Hebel 16 und 28 mit dem oben erwähnten Umfangsspiel eingreifen. Mit 42 ist eine Abdeckplatte bezeichnet, die die beweglichen Funktionsteile an der Montageplatte 11 festhält.

Die beiden Hebel 16 und 28 der Schaltglieder 15 und 27 sind im übrigen identisch und spiegelbildlich in die Funktionslage eingebaut.

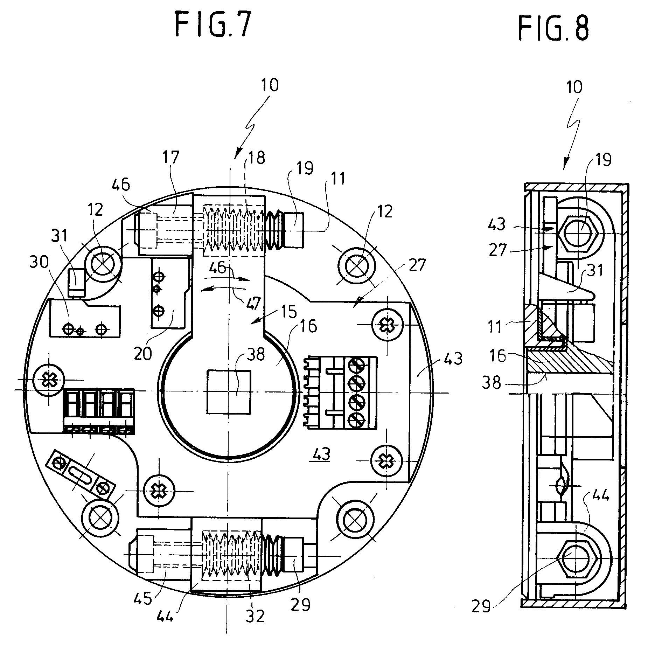

Die in den Fig. 7 bis 10 dargestellte dritte Ausführungsform ist im Prinzip eine Weiterentwicklung der zuvor beschriebenen zweiten Ausführung und im Aufbau, insbesondere durch Verwendung von Druckgußteilen anstelle von Blechstanzteilen, auch eleganter. Außerdem weist sie weniger Einzelteile auf. Im übrigen zeigt diese Ausführung vom Prinzipiellen Aufbau und von der Funktion her bedeutende Übereinstimmungen mit der ersten Ausführungsform, denn auch hier sind - wenngleich andersartig gestaltet - Schlepp- bzw. Koppelhebel vorgesehen.

Das erste Schaltglied 15 ist wieder als einarmiger Hebel 16 ausgebildet, der jedoch direkt - über einen Innenmehrkant 38 - zur Drehmitnahme auf den Mehrkant des nicht dargestellten Motors aufsteckbar ist. Dem Schaltglied 15 sind ein erster Schalter 20, ein Anschlag 17 mit als Tellerfederpaket ausgebildeter Druckfederung 18 und eine Einstellschraube 19 zugeordnet. Der Schalter 20 ist auf dem zweiten Schaltglied 27 befestigt, welches jedoch nicht mehr als einarmiger Hebel, sondern im wesentlichen in Form eines Drehteller 43 gestaltet ist. Dieser weist einen Kloben 44 zur einseitigen Abstützung des zweiten Tellerfederpaketes 32 auf. Die zugeordnete Einstellschraube 29 ist in eine Aufnahme 45 eingeschraubt, die fest mit der Montageplatte 11, insbesondere einstückig-stoffschlüssig, verbunden ist. Die zugehörige Anordnung des zweiten Schalters 30 und des Betätigungsnockens 31 ist räumlich getrennt vorgesehen, und zwar der Schalter 30 fest auf dem Drehteller 43 des zweiten Schaltgliedes 27 und der Betätigungsnocken 31 fest an der Montageplatte 11.

Die Funktionsweise dieser Vorrichtung versteht sich wie folgt. Gesetzt den Fall, das Gegen-Drehmoment belaste das erste Schaltglied 15 in Richtung des Pfeiles 46, so entfernt sich das Schaltglied 15 (Hebel 16) vom Schalter 20 und öffnet diesen mit der Folge der Unterbrechung des Motorstromkreises. Wird das Schaltglied 15 in Richtung des Pfeiles 47 entgegengesetzt belastet, führt es das zweite Schaltglied 27 (Drehteller 43) in derselben Richtung mit, denn der Hebel 16 liegt ja an der fest mit dem Schaltglied 27 verbundenen Schraubenaufnahme für die Einstellschraube 19 solange an, bis die einwirkende Kraft entgegen der Wirkung der Feder 32 ausreicht, den Schalter 30 von seinem Betätigungsnocken 31 zu entfernen und ihn zu öffnen.

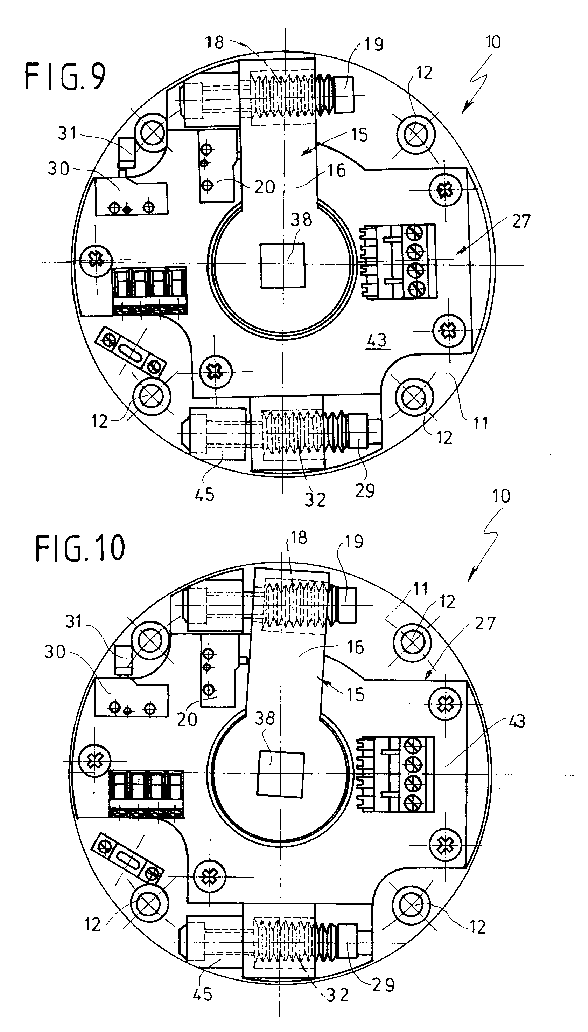

Beide Funktionsstellungen sind in den Fig. 9 und 10 dargestellt, wobei in Fig. 9 der Schalter 30 und in Fig. 10 der Schalter 20 geöffnet ist. Das Schaltglied 15 als einarmiger Hebel 16 bildet also mit dem drehtellerartigen Schaltglied 27 eine sich drehend bewegende Koppel- bzw. Schlepphebelanordnung. Bezogen auf die Fig. 9 und 10 sind beide Hebel gemeinsam, gesteuert durch das Schaltglied 15, entgegen dem Uhrzeigersinn bewegbar. Im Uhrzeigersinn ist der Hebel 16 des Schaltgliedes 15 bei feststehendem zweiten Schaltglied 27 allein bewegbar, wobei ihm der von der Feder 32 rückstellend belastete Drehteller folgen kann, wenn entsprechende, von den Federkräften bestimmten Kraftverhältnisse vorliegen.

Für alle bislang geschilderten Ausführungsbeispiele gilt, daß in der Regel diejenige Feder, die dem Schalter zugeordnet ist, der die Abschaltung bewirkt, wenn der Rolladenpanzer beim Herablassen auf ein Hindernis stößt, deutlich schwächer ist (die Einstellung also auf einen geringeren Schwellwert vorgenommen wird) als die Feder, die in Gegenrichtung wirken soll. Das liegt daran, daß die im Betrieb dabei auftretenden entsprechenden Kräfte bzw. Drehmomente unterschiedlich sind.

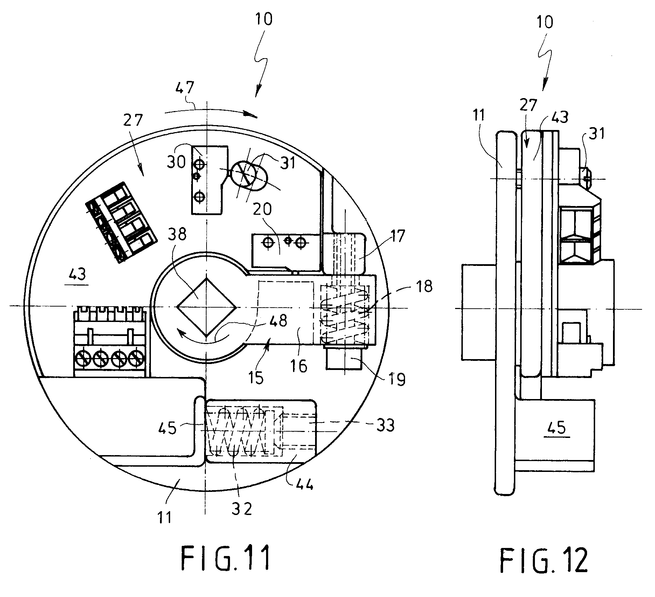

Als letztes Ausführungsbeispiel zeigen die Fig. 11 bis 14 eine Abschaltvorrichtung für Markisen, die vom Grundaufbau her mit der zuletzt geschilderten vierten Ausführungsform zur Abschaltung von Rolläden, Rolltoren u.dgl. vergleichbar ist, jedoch eine wesentliche Besonderheit aufweist, die daher rührt, daß eine Markise im ausgefahrenen Zustand die Wickelwelle nicht blockieren kann. Die optimal gewünschte Ausfahrlage ist vielmehr dann erreicht, wenn sich die Gelenkarme der Markisenkonstruktion noch nicht vollständig gestreckt haben und deshalb noch ein, und zwar ein beachtlicher, Zug über das Markisentuch auf die Wickelwelle ausgeübt wird.

Zunächst ist in schon bekannter Weise auf einer tellerartigen, raumfest anzuordnenden Montageplatte 11 ein einarmiger Hebel 16 als erstes Schaltglied 15 mit zugehörigem Schalter 20, einem Anschlag 17, einer Feder 18 und einer Einstellschraube 19 für diese Feder 18 vorgesehen. Wie ebenfalls zuvor weist der einarmige Hebel 16 einen Innenmehrkant 38 zur Schwenkmitnahme durch das nicht dargestellte mehrkantige Kupplungsglied auf, und wiederum ist das zweite Schaltglied 27 als Drehteller 43 ausgebildet. Er trägt sowohl den Schalter 20 als auch den zweiten Schalter 30, der mit einem an der Montageplatte 11 befestigten Anschlag 31, hier in Gestalt einer einen Längsschlitz im Drehteller 43 durchgreifenden Schraube, zusammenwirkt. Ebenfalls am zweiten Schalthebel 27, dem Drehteller 43, fest angeordnet ist eine Aufnahme 44 für die zweite Feder 32 und ihre hier als Madenschraube ausgeführte Einstellschraube 33. Der mit dieser Feder 32 zusammenwirkende Anschlag ist mit 45 bezeichnet und als Rippe unmittelbar an der Montageplatte 11 angeformt.

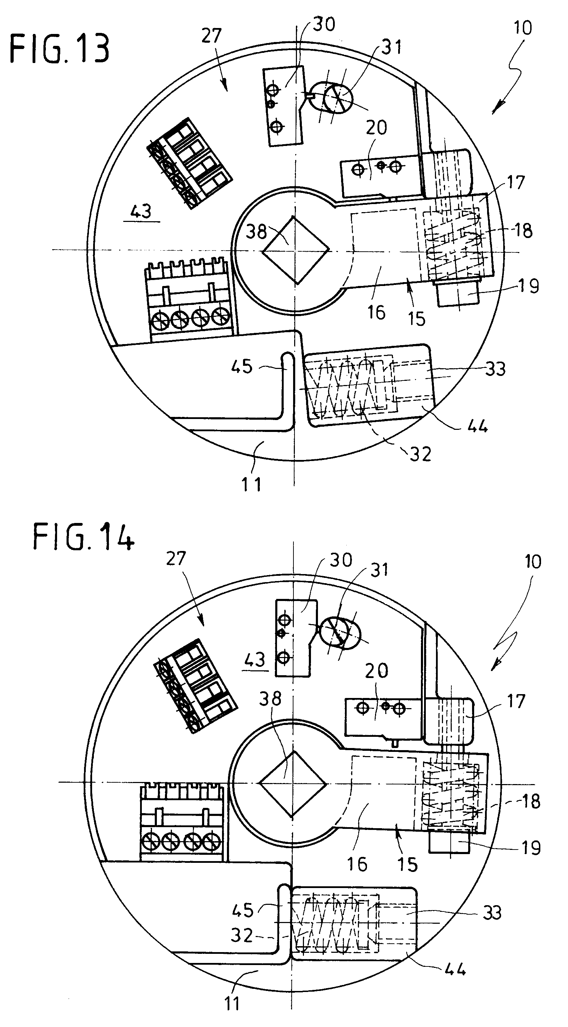

Die Besonderheit besteht vornehmlich darin, daß der zweite Schalter 30 für den ausgefahrenen Zustand der Markise ein Öffner ist, und der Schalter 20 für die Endabschaltung in der eingefahrenen Lage des Markisentuches zwei Kontakte beinhaltet, nämlich einen Öffnerkontakt und einen einen Schließerkontakt, wobei der Öffnerkontakt parallel zum Öffner des Schalters 30 geschaltet ist. Statt einen Schalter 20 mit zwei unterschiedlichen, unabhängigen Kontakten zu verwenden, kann man auch zwei entsprechende, jeweils einen Kontakt enthaltende Mikroschalter in Übereinanderanordnung einsetzen. In diesem falle läge der zweite Schalter z.B. verdeckt unter dem in den Figuren 14 sowie 16 und 17 sichtbaren Schalter 20. Warum zwei unabhängige Kontake oder Schalter Anwendung finden, versteht sich am besten anhand der Schilderung der Funktionsabläufe und unter der Annahme, daß das Markisentuch bei Drehung der Tuchwelle in Richtung des Umfangspfeiles 47 abgewickelt bzw. ausgefahren werde. Man unterscheidet nun folgende Betriebssituationen:

### 1. Die Markise wird eingefahren:

In der eingefahrenen Endlage, in der beispielsweise die Fallstange der Markise gegen einen festen Anschlag trifft, wird ein Gegendrehmoment in Richtung des Pfeiles 48 auf das Schaltglied 15 ausgeübt, welches entsprechend schwenkt und vom Schalter 20 abhebt, sobald das Drehmoment eine Größenordnung erreicht hat, die die Kraft der Feder 18 übersteigt. Da das Schaltglied 15 bei dieser Bewegung in Umfangsrichtung 48 zugleich das zweite Schaltglied 27, nämlich den Drehteller 43, mitnimmt, weil die Einstellschraube 19 an dem am Drehteller befestigten Lagerbock 17 zieht, wird die Feder 32 gespannt, deren Federende sich gegen den Anschlag 45 druckschlüssig abstützt. Die Folge davon ist, daß der Schalter 30 betätigt wird und öffnet. Gleichzeitig geht der Öffnerkontakt des Schalters 20 in den unbetätigten Zustand über und schließt. Dies ist erforderlich, damit die Markise aus der eingefahrenen Endstellung wieder herausgefahren werden kann.

### 2. Ausfahren des Markisentuches:

Den im oder am Gebäude angebrachten Betriebsschalter stellt man auf "Ausfahren". Der Motorstrom fließt über den geschlossenen Öffner des Schalters 20 in den Motor, die Markise fährt aus. Die Feder 32 reagiert und dehnt sich wieder aus.

Bis der Schalter 20 und sein Öffnerkontakt betätigt werden, geschieht folgendes: Während der Bewegung des Hebels 16 des ersten Schaltgliedes 15 bis zu seinem Anschlag 17 übernimmt der Öffnerkontakt des Schalters 20 die Funktion des zweiten Schalters 30, und genau das ist der Zweck des zusätzlichen Öffnerkontaktes im Schalter 20. Kurz bevor der Hebel 16 an den Anschlag 17 trifft, gelangt der Schalter 30 in die unbetätigte Stellung und schließt. Er hat jetzt die Funktion des Öffnerkontaktes im Schalter 20 übernommen. Liegt der Hebel 16 schließlich am Anschlag 17 an, schließt der Schließer des Schalters 20 und sein Öffner öffnet wieder.

Mit Hilfe der Einstellschraube 33 wird die zweite Feder 32 so einjustiert, daß sie auf definierte Zugspannung am Tuch anspricht. Mit ansteigender Spannung wird die Feder 32 zunehmend zusammengedrückt, wodurch der Endschalter 30 gegen den Anschlag 31 fährt, öffnet und den Motorstrom unterbricht.

Diese Situation wird immer dann erreicht, bevor die Markise völlig ausgefahren ist, die Gelenkarme also noch nicht völlig gestreckt sind. Denn hier erreicht der Zug am Markisentuch sein Maximum, bedingt durch die Federkraft der sich spreizenden Gelenkarme und das Gewicht der Fallstange. Deshalb liegt in dieser von der Markisenzugkraft gesteuerten Endabschaltung des Motors ein erheblicher Vorteil, denn beim Ausfahren der Markise wird der Motor nicht erst dann abgeschaltet, wenn das Markisentuch unansehnlich schlaff durchhängt, sondern kurz zuvor, und zwar dann, wenn es optimal gestrafft ist.

## Patentansprüche

1. Vorrichtung zur Antriebsabschaltung des mittels eines Kupplungsgliedes (23) wie Mehrkant in einem als Drehmomentstütze wirkenden Motorlager aufgehängten Motors elektrisch betriebener Rolläden, Rolltore u.dgl. mittels mindestens eines Schaltgliedes (15; 27), das wenigstens in einer Endlage des Panzers einen Schalter (20; 30) betätigend den Motorstromkreis unterbricht, dadurch gekennzeichnet, daß das Schaltglied (15; 27) gegen Wirkung einer in ihrer Rückstellkraft einstellbaren Feder (18; 32) auf einen den Stromkreis des Motors schließenden Schalter einwirkend jeweils die Drehmomentstütze ausbildet, die mit dem Kupplungsglied (23) auf Bewegungsmitnahme gekuppelt ist, daß das bei - z.B. infolge Erreichens einer Endlage, anderweitigen Hemmung od.dgl. - blockiertem Motor oder bei Erreichen einer einstellbaren Zugkraft des Panzers auf das Schaltglied einwirkende Drehmoment den Schalter (20; 30) betätigt, daß die Vorrichtung eine Doppel-Schaltgliedanordnung (15, 27) aufweist und Schalter (20, 30) sowie einstellbare Federn (18, 32) zweifach - und zwar jeweils gegensinnig ansprechend - vorhanden sind, wobei jede als Druckfeder ausgebildete Feder (18, 32) auf dem Schaft einer Einstellschraube (19, 29, 33) zwischen deren Kopf und dem diesem zugewandten Schaltglied (15, 27) lagert und daß die Vorrichtung (10) mit der Motorwelle durch Anstecken an deren Mehrkant (23) kuppelbar ist.

2. Vorrichtung zur Antriebsabschaltung des mittels eines Kupplungsgliedes (23) wie Mehrkant in einem als Drehmomentstütze wirkenden Motorlager aufgehängten Motors elektrisch betriebener Markisen u.dgl. mittels mindestens eines Schaltgliedes (15; 27), das wenigstens in einer Endlage des Markisentuchs einen Schalter (20; 30) betätigend den Motorstromkreis unterbricht, dadurch gekennzeichnet, daß das Schaltglied (15; 27) gegen Wirkung einer in ihrer Rückstellkraft einstellbaren Feder (18; 32) auf einen den Stromkreis des Motors schließenden Schalter einwirkend jeweils die Drehmomentstütze ausbildet, die mit dem Kupplungsglied (23) auf Bewegungsmitnahme gekuppelt ist, daß das bei - z.B. infolge Erreichens einer Endlage, anderweitigen Hemmung od.dgl. - blockiertem Motor oder bei Erreichen einer einstellbaren Zugkraft des Markisentuchs auf das Schaltglied einwirkende Drehmoment den Schalter (20; 30) betätigt, daß die Vorrichtung eine Doppel-Schaltgliedanordnung (15, 27) aufweist, daß Schalter (20, 30) sowie einstellbare Federn (18, 32) zweifach - und zwar jeweils gegensinnig ansprechend - vorhanden sind und daß einer der beiden Schalter (30) einen Öffnerkontakt und der andere Schalter (20) sowohl einen Öffnerkontakt als auch einen Schließerkontakt aufweist, wobei die Öffnerkontakte derart parallel geschaltet sind, daß jeder Öffnerkontakt vorübergehend die Funktion des anderen Öffnerkontaktes übernehmen kann.

3. Vorrichtung nach Anspruch 2, dadurch gekennzeichnet, daß die Feder (18; 32) als Druckfeder nach Art einer Schrauben- oder Tellerfeder oder als Tellerfederpaket ausgebildet und mittels einer Einstellschraube (19; 29; 33) verspannbar ist.

4. Vorrichtung nach einem der Ansprüche 1 bis 3, dadurch gekennzeichnet, daß zwei als einarmige Schwenkhebel (16, 28) ausgebildete Schaltglieder (15, 27) vorgesehen sind, von denen jeweils nur einer in Abhängigkeit von der Drehrichtung, aus der der Motor blockiert, schalterbetätigend vom Kupplungsglied (23) beaufschlagbar ist.

5. Vorrichtung nach Anspruch 4, dadurch gekennzeichnet, daß die beiden Hebel (16, 28) alternativ von einem am Kupplungsglied (23) angreifenden Mitnehmer (36) beaufschlagbar sind.

6. Vorrichtung nach Anspruch 4 oder 5, dadurch gekennzeichnet, daß zwischen dem Mitnehmer (36) und den beiden Hebeln (16, 28) Bewegungsspiel (39) vorgesehen ist, um in Abhängigkeit von der Bewegungsrichtung jeweils nur einen Hebel (16 oder 28) zu bewegen.

7. Vorrichtung nach einem der Ansprüche 4 bis 6, dadurch gekennzeichnet, daß der eine der beiden Hebel (16, 28) beide Schalter (20, 30) trägt, von denen einer mit dem anderen Hebel und der andere unabhängig davon mit einem raumfesten Anschlag (17) zusammenwirkt.

8. Vorrichtung nach einem der Ansprüche 4 bis 7, dadurch gekennzeichnet, daß die Hebel (16, 28) als Koppel- oder Schlepphebel ausgebildet und/oder angeordnet sind, derart, daß beide Hebel (16, 28) durch gegenseitige druckschlüssige Beaufschlagung gemeinsam, in die eine, einer der beiden Hebel aber auch allein in die andere Richtung steuerbar ist.

9. Vorrichtung nach Anspruch 1 oder einem der folgenden, dadurch gekennzeichnet, daß die Schaltgliedanordnung einen drehtellerartig ausgebildeten Schalthebel (43) umfaßt, der Bauteile zur Abschaltung des Motors in beiden Drehrichtungen trägt.

## Claims

1. A device for switching on the drive of revolving shutters, sliding doors or the like electrically operated by a coupling element (23) such as a polygon of a motor suspended in a motor bearing acting as a torque bearing, by means of at least one switch element (15; 27) which opens the motor circuit and operates a switch (20; 30) in at least one end position of the casing, characterised in that the switch element (15; 27), by acting against the action of an adjustable-resiliency spring (18; 32) on a switch closing the motor circuit, constitutes the respective torque bearing coupled to the coupling element (23) so as to be entrained in motion; when the motor is stopped e.g. through reaching an end position or being obstructed for other reasons, or when the casing reaches an adjustable tensile force, the torque acting on the switch element actuates the switch (20; 30); the device comprises a double switch-element arrangement (15, 27) and switches (20, 30) and adjustable springs (18, 32) are present in pairs, in each case responding in opposite directions, and each spring (18, 22), constructed as a pressure spring, is mounted on the shank of an adjusting screw (19, 29, 33) between its head and the facing switch element (15, 27); and the device can be coupled to the motor shaft by attaching it to the polygon (23) thereof.

2. A device for switching off the drive of a blind or the like electrically operated by a coupling element (23) such as a polygon of a motor suspended in a bearing acting as a torque bearing, by means of at least one switch element (15; 27) which opens the motor circuit by actuating a switch (20; 30) in at least one end position of the blind linen, characterised in that the switch element (15; 27), against the action of an adjustable-resiliency spring (18; 32), acts on a switch closing the motor circuit and constitutes the respective torque bearing coupled to the coupling element (23) for being entrained in motion; when the motor is stopped, e.g. through reaching an end position or through being obstructed for other reasons - or when the blind linen reaches an adjustable tensile force, the torque acting on the switch element operates the switch (20; 30); the device comprises a double switch-element arrangement (15, 27); switches and adjustable springs (18, 32) are provided in pairs, in each case responding in opposite directions; and one of the two switches (30) has an opening contact and the other switch (20) has an opening contact and also a closing contact, the opening contacts being connected in parallel so that each opening contact can temporarily take over the function of the other opening contact.

3. A device according to claim 2, characterised in that the spring (18; 32) is a pressure spring such as a helical or cup spring or a stack of cup springs and can be tightened by an adjusting screw (19; 29; 33).

4. A device according to any of claims 1 to 3, characterised in that two switch elements (15, 27) in the form of one-armed rocking levers (16, 28) are provided, only one at a time being actuated by the coupling element (23) so as to operate the switch in dependence on the direction of motion in which the motor is stopped.

5. A device according to claim 4, characterised in that the two levers (16, 28) are alternately actuated by a cam (36) engaging the coupling element (23).

6. A device according to claim 4 or 5, characterised in that a clearance (39) for motion is provided between the cam (36) and the two levers (16, 28) so that only one lever (16 or 28) at a time is moved in dependence on the direction of motion.

7. A device according to any of claims 4 to 6, characterised in that one of the two levers (16, 28) bears both switches (20, 30), one of which co-operates with the other lever whereas the other co-operates independently thereof with a stationary abutment (17).

8. A device according to any of claims 4 to 7, characterised in that the levers (16, 28) are constructed and/or arranged as coupling levers or drag levers, so that both levers (16, 28) can be actuated together by reciprocal pressure operation in one direction, and also one of the two levers can be actuated in the other direction.

9. A device according to claim 1 or one of the subsequent claims, characterised in that the switch-element arrangement comprises a shift lever (43) similar to a turntable, bearing components for switching off the motor in both directions of rotation.

## Revendications

1. Dispositif pour déconnecter l'entraînement du moteur de volets roulants, de portes à rideaux et similaires à fonctionnement électrique, ce moteur étant suspendu au moyen d'un organe d'accouplement (23) comme un contour polygonal dans un palier de moteur agissant comme appui du couple, et ce, au moyen d'au moins un organe de commutation (15, 27) qui interrompt le circuit électrique du moteur en actionnant un interrupteur (20, 30) dans au moins une position finale du rideau, caractérisé par le fait que l'organe de commutation (15, 27), à l'encontre de l'action d'un ressort (18, 32) dont la force de rappel peut être réglée, constitue à chaque fois, en agissant sur un interrupteur qui ferme le circuit électrique du moteur, l'appui du couple qui est accouplé à l'organe d'accouplement (23) en vue de son entraînement en déplacement, par le fait que, dans le cas où le moteur est bloqué - par exemple du fait qu'une position finale a été atteinte, d'un autre blocage ou similaire -, ou dans le cas où une force de traction réglable a été atteinte sur le rideau, le couple qui agit sur l'organe de commutation actionne l'interrupteur (20, 30), par le fait que le dispositif comporte un double système d'organes de commutation (15, 27), et que les interrupteurs (20, 30), ainsi que les ressorts réglables (18, 32), sont présents en double, et ce, en répondant à chaque fois dans des sens opposés, cependant que chaque ressort (18, 32) réalisé sous la forme d'un ressort de compression est monté sur la tige d'une vis de réglage (19, 29, 33) entre la tête de celle-ci et l'organe de commutation (15, 27) qui est tourné vers elle, et par le fait que le dispositif (10) peut être accouplé à l'arbre du moteur par enfoncement sur un contour polygonal (23).

2. Dispositif pour déconnecter l'entraînement du moteur de stores et similaires à fonctionnement électrique, ce moteur étant suspendu au moyen d'un organe d'accouplement (23) comme un contour polygonal dans un palier de moteur agissant comme appui du couple, et ce, au moyen d'au moins un organe de commutation (15, 27) qui interrompt le circuit électrique du moteur en actionnant un interrupteur (20, 30) dans au moins une position finale du tissu du store, caractérisé par le fait que l'organe de commutation (15, 27), à l'encontre de l'action d'un ressort (18, 32) dont la force de rappel peut être réglée, constitue à chaque fois, en agissant sur un interrupteur qui ferme le circuit électrique du moteur, l'appui du couple qui est accouplé à l'organe d'accouplement (23) en vue de son entraînement en déplacement, par le fait que, dans le cas où le moteur est bloqué - par exemple du fait qu'une position finale a été atteinte, d'un autre blocage ou similaire -, ou dans le cas où une force de traction réglable a été atteinte sur le tissu du store, le couple qui agit sur l'organe de commutation actionne l'interrupteur (20, 30), par le fait que le dispositif comporte un double système d'organes de commutation (15, 27), et que les interrupteurs (20, 30), ainsi que les ressorts réglables (18, 32), sont présents en double, et ce, en répondant à chaque fois dans des sens opposés, et par le fait que l'un (30) des deux interrupteurs est un contact repos, et que l'autre interrupteur (20) comporte aussi bien un contact repos qu'un contact travail, les contacts repos étant montés en parallèle d'une manière telle que chaque contact repos puisse assumer provisoirement la fonction de l'autre contact repos.

3. Dispositif selon la revendication 2, caractérisé par le fait que les ressorts (18, 32) sont réalisés sous la forme de ressorts de compression à la manière d'un ressort hélicoïdal ou d'un ressort conique ou sous la forme d'une pile de rondelles élastiques en pouvant être comprimés au moyen d'une vis de réglage (19, 29, 33).

4. Dispositif selon l'une des revendications 1 à 3, caractérisé par le fait qu'il est prévu deux organes de commutation (15, 27) qui sont réalisés sous la forme de leviers pivotants (16, 28) à un seul bras et parmi lesquels un seul, en fonction du sens de rotation dans lequel le moteur se bloque, peut être soumis à chaque fois à l'action de l'organe d'accouplement (23) en actionnant l'interrupteur.

5. Dispositif selon la revendication 4, caractérisé par le fait que les deux leviers (16, 28) peuvent être soumis alternativement à l'action d'un organe d'entraînement (36) qui vient en prise avec l'organe d'accouplement (23).

6. Dispositif selon la revendication 4 ou 5, caractérisé par le fait qu'il est prévu entre l'organe d'entraînement (36) et les deux leviers (16, 28) un jeu (39) qui permet le déplacement, afin de déplacer un seul levier (16 ou 28) à chaque fois en fonction de la direction du déplacement.

7. Dispositif selon l'une des revendications 4 à 6, caractérisé par le fait que l'un des deux leviers (16, 28) porte les deux interrupteurs (20, 30) parmi lesquels l'un coopère avec l'autre levier et l'autre coopère indépendamment de cela avec une butée fixe (17).

8. Dispositif selon l'une des revendications 4 à 7, caractérisé par le fait que les leviers (16, 28) sont réalisés sous la forme de leviers d'accouplement ou d'entraînement et/ou qu'ils sont disposés d'une manière telle que les deux leviers (16, 28), en les soumettant à l'action d'une pression dans des sens opposés, peuvent être actionnés en commun dans l'une des directions, l'un des deux leviers pouvant être aussi actionné seul dans l'autre direction.

9. Dispositif selon la revendication 1 ou l'une des suivantes, caractérisé par le fait que le système d'organes de commutation comprend un levier de commutation (43) qui est réalisé à la manière d'un plateau tournant et qui porte des éléments constitutifs destinés à la déconnexion du moteur dans les deux sens de rotation.
